# EUROPÄISCHE PATENTSCHRIFT

(11) **EP 0 338 322 B1**
(45) Veröffentlichungstag und Bekanntmachung des Hinweises auf die Patenterteilung: **14.07.1993**
(21) Anmeldenummer: 89105971.9
(22) Anmeldetag: 05.04.1989
(51) Int. Cl.: B01D 1/12, G21F 9/08

(54) **Umlaufverdampferanlage zur Dekontamination von insbesondere radioaktiven Flüssigkeiten**
Evaporating plant with forced circulation for decontamination of radioactive liquids
Installation pour traitement des liquides contaminés par la radioactivité par évaporation à circulation forcée

(30) Priorität: 18.04.1988 DE 3812894
(43) Veröffentlichungstag der Anmeldung: 25.10.1989
(73) Patentinhaber: SIEMENS AKTIENGESELLSCHAFT, 80333 München (DE)
(72) Erfinder: Eckardt, Bernd, Dipl.-Ing., D-6454 Bruchköbel (DE)

(56) Entgegenhaltungen:
- EP-A- 0 214 934
- DE-A- 2 361 791
- DE-A- 2 745 544
- DE-B- 1 546 486
- DE-B- 2 340 195
- DE-B- 2 612 510
- US-A- 2 609 277
- US-A- 4 273 670
- CHEMIE-INGENIEUR-TECHNIK, Band 40, Nr. 8, 1968, Seiten 377-382, Weinheim, DE; R. BILLET:"Ventilböden mit Venturidüsen"

## Beschreibung

Die Erfindung betrifft eine Umlaufverdampferanlage zur Dekontamination von verunreinigten, insbesondere radioaktiv verunreinigten, Flüssigkeiten mit einem Verdampfer und einer nachgeschalteten Abstreifkolonne mit Destillat als Waschflüssigkeit.

Eine Umlaufverdampferanlage der obengenannten Art ist z.B. aus DE-C-26 29 581 bekannt. Dabei ist direkt über einem Verdampferteil eine Reinigungskolonne mit mehreren Böden angeordnet. Die Böden sollen den im Verdampferteil entstehenden Dampf in aufwärtssteigender Richtung durchlassen, so daß der Dampf schließlich im Bereich des Kolonnenkopfes durch eine Abzugsleitung einem Kondensator zugeführt werden kann. Ein Teil des Destillats wird über eine Rücklaufleitung oberhalb des obersten Bodens der Kolonne als Waschflüssigkeit im Gegenstrom zu dem aufsteigenden Dampf aus Auslaßdüsen abgerieselt. Die damit erreichbaren Dekontaminationsfaktoren genügen jedoch nicht für besondere Ansprüche.

Deshalb besteht die Aufgabe der Erfindung darin, mit einer Umlaufverdampferanlage der eingangs genannten Art höhere Dekontaminationsfaktoren zu erreichen. Dieses Ziel soll nicht, wie naheliegend wäre, durch eine Vergrößerung der Zahl der Böden erreicht werden, weil dies den Aufwand, vor allen Dingen das Bauvolumen für eine solche Umlaufverdampferanlage erhöhen würde. Ziel der Erfindung ist vielmehr eine neue Ausbildung, die erhöhte Dekontaminationsfaktoren bei höchstens gleichem, vorteilhafterweise aber noch verringertem Aufwand erreicht.

Gemäß der Erfindung ist vorgesehen, daß die Abstreifkolonne als Venturidüsenkolonne ausgeführt ist, und daß im Bereich eines die Venturidüsen tragenden Bodens Schlitze zum Zuführen der Waschflüssigkeit in die Venturidüsen vorgesehen sind. Weitere Ausgestaltungen der Erfindung sind in den Unteransprüchen angegeben.

Es wurde gefunden, daß mittels einer Umlaufverdampferanlage mit integrierter, passiv betriebener Venturidüsenabstreifkolonne ein hochreines Destillat bei deutlich verkleinerten Anlagenabmaßen erzeugt werden kann.

Die Umlaufverdampferanlage dient hierbei zur Aufkonzentrierung des Sumpfproduktes, zur Erzeugung des Brüdendampfes sowie der Bereitstellung des erforderlichen Brüdendampf-Treibdruckes.

Die Verunreinigungen verbleiben weitgehend in der Flüssigphase. Im aufsteigenden Brüdendampfstrom noch enthaltene Verunreinigungen werden durch rückströmendes, bereits gereinigtes Destillat in den nachgeschalteten Abscheidereinrichtungen entfernt, wobei die Verdampferanlage mit passiv betriebenen Venturiabstreifböden neben einem guten Stoffaustausch eine besonders effektive Rückhaltung feinster aerosolförmiger Verunreinigung und damit hohe Dekontaminationsfaktoren ermöglichen. Im Gegensatz zu Blasenwaschprozessen wie bei Glocken- oder Siebbodenabstreifern wird hierbei durch die Umwandlung des Verdampfertreibdampfdruckes innerhalb des Venturis in Geschwindigkeit und gleichzeitige Ansaugung des Destillats im Kehlenbereich eine Feintröpfchenerzeugung erreicht. Durch die hohen Geschwindigkeitsunterschiede zwischen Brüdendampf und Destillat wird eine optimale Aerosolabscheidung sowie durch die großen Stoffaustauschflächen der Waschflüssigkeitsfragmente ein optimaler Stoffübergang ermöglicht. Im Bereich der Feinstaerosole ergibt sich durch dieses Verfahren eine Erhöhung des Dekontaminationsfaktors gegenüber anderen Wäscherböden um den Faktor 10 - 50.

Bei der Erfindung kann bereits mit einem Venturiboden allein ein Dekontaminationsfaktor ≧ 10⁵ und in der Kombination mit konventionellen Sieb- oder Glockenböden bei (insgesamt bei nur fünf Böden) ein Dekontaminationsfaktor von insgesamt > 10⁸ erwartet werden.

Innerhalb der auf einzelnen Böden verteilten einzelnen Flachoder Rundventuris werden Geschwindigkeiten ≧ 50 m/s erzeugt. Mit diesem Geschwindigkeitsfeld können selbst bei einem Drittel des Auslegungsdurchsatzes noch die genannten hohen Venturiabscheidegrade erreicht werden. Eine Venturidurchsatzregelung kann somit entfallen. Durch die Erzeugung des Venturitreibdruckes mit dem Verdampfer kann direkt vom Verdampferbetriebsdruck auf die Verdampfungsmenge geschlossen werden und eine entsprechende Leistungsregelung erfolgen. Die Venturidüsen haben keine Stellglieder für die Geschwindigkeit.

Zur näheren Erläuterung der Erfindung werden anhand der beiliegenden Zeichnung Ausführungsbeispiele beschrieben.

Es zeigen:
- FIG 1: eine Umlaufverdampferanlage nach der Erfindung in einer schematisierten Darstellung,
- FIG 2: ein Schema einer geänderten Umlaufverdampferanlage, bei der den Venturidüsen einige Glocken- oder Siebböden vorgeschaltet sind,
- FIG 3: eine Umlaufverdampferanlage, bei der die den Venturidüsen vorgeschalteten Boden in einem gesonderten Kolonnenteil angeordnet sind und
- FIG 4: in größerem Maßstab drei nebeneinander angeordnete Venturidüsen in unterschiedlicher Ausbildung.

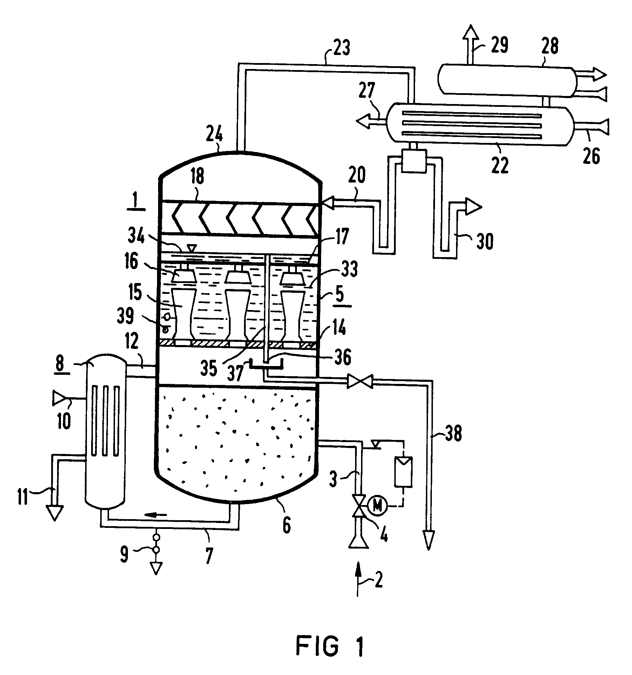

Die in FIG 1 dargestellte Umlaufverdampferanlage 1 dient zur Reinigung des mit z.B. 10⁻¹ Ci/m³ (3.7·10⁹ Bq/m³) radioaktiv kontaminierten Kühlwassers eines Druckwasser-Reaktors. Das zu reinigende Kühlwasser wird als sogenanntes Rohwasser in Richtung des Pfeiles 2 über eine Anschlußleitung 3 eingegeben, deren Einlaßventil 4 für einen bestimmten Flüssigkeitsstand in dem Brüdengefäß 5 sorgt. Die Flüssigkeit steht über eine am Boden 6 des Gefäßes 5 angebrachte Leitung 7 mit einem Verdampfer 8 in Verbindung, der mit Hilfsdampf beheizt wird. Aus der Leitung 7 kann das Verdampferkonzentrat bei 9 abgezogen werden. Der Hilfsdampf wird bei 10 eingespeist; das Kondensat wird bei 11 abgezogen. Das verdampfte Rohwasser verläßt den Verdampfer 8 und tritt über die Leitung 12 in das Brüdengefäß ein. Die Temperatur beträgt z.B. 105 °C, der Druck 1,3 bar.

Etwa in der Mitte des Brüdengefäßes 5 ist ein horizontaler, ebener Boden 14 angebracht, an dem mehrere Venturidüsen 15 sitzen. Die Venturidüsen 15 haben z.B. bei einer Länge von 100 bis 500 mm eine Kehlbreite von 10 bis 50 mm. Sie sind rotationssymmetrisch ausgebildet. Über ihren Auslaßöffnungen sitzen Prallbleche 16, die an einem Siebboden 17 befestigt sind. Die Venturidüsen werden bei Vollast mit einer Geschwindigkeit im Kehlbereich von mindestens 100 m/s betrieben. Noch bei geringem Teillastbetrieb liegt die Geschwindigkeit bei 30 m/s.

Oberhalb des Siebbodens 17 ist ein Tropfenabscheider 18 vorgesehen. Er wird aus einer Leitung 20 mit Destillat bespült, das aus einem Kondensator 22 stammt. Der Kondensator ist über eine Dampfleitung 23 mit der Oberseite 24 des Brüdengefäßes 5 verbunden. Er wird mit Kühlwasser gekühlt, das bei 26 in den Kondensator 22 eintritt und bei 27 austritt. Ober dem Kondensator 22 sitzt ein mit ihm verbundener Gaskühler 28, aus dem die in der Umlaufverdampferanlage enthaltenen, z.B. aus dem Kühlwasser gelösten Gase über eine Leitung 29 in ein nicht weiter dargestelltes Abluftsystem abgeführt werden.

Der größte Teil des im Kondensator 22 niedergeschlagenen Kondensats verläßt die Umlaufverdampferanlage über die Leitung 30 als Reinwasser. Es hat gegenüber der Eingangsaktivität des Rohwassers von 10⁻¹ Ci/m³ (3.7·10⁹ Bq/m³) nur noch eine Aktivität von 10⁻⁶ - 10⁻⁹ Ci/m³ (3.7·10⁴₋37 Bq/m³) Liter, so daß ein Dekontaminationsfaktor von 10⁵ - 10⁸ erreicht wird.

Beim Ausführungsbeispiel nach FIG 1 ist dargestellt, daß die Venturiwäscher 15 in einem Flüssigkeitsvolumen 33 arbeiten, dessen Flüssigkeitsspiegel 34 durch ein Überlaufrohr 35 bestimmt ist. Das untere Ende 36 des Überlaufrohres führt in einen Auffangtrichter 37, an den eine aus dem Brüdengefäß 5 führende Ablaufleitung 38 angeschlossen ist. Das Ablaufwasser kann nach Feststellung seiner Radioaktivität für geeignete Zwecke verwendet werden. Man kann das Ablaufwasser aber auch in den Sumpf des Brüdengefäßes 5 zurücklaufen lassen und dann auf die Ablaufleitung 38 verzichten. Das Flüssigkeitsvolumen 33 im Bereich der Venturiwäscher 15 kann ohne Minderung der Effektivität durch Füllkörper 39 verkleinert werden.

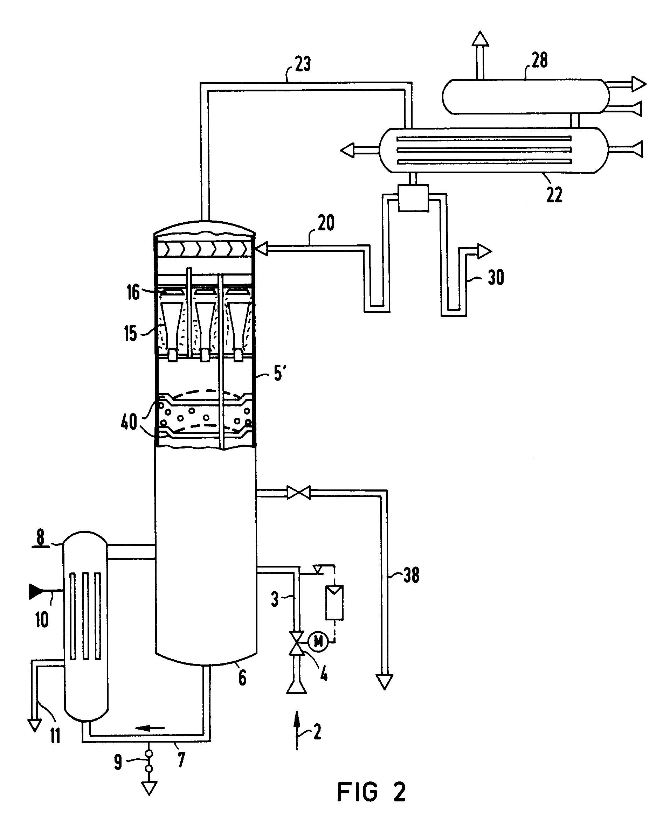

Bei dem Ausführungsbeispiel nach FIG 2 ist das Brüdengefäß 5′ verlängert. Es enthält zwischen den Venturidüsen 15 und dem Dampfraum in der Nähe des Bodens 6 noch einige Siebböden 40. Beim Ausführungsbeispiel sind zwei Siebböden dargestellt, die eine Vorwaschung des Dampfes mit einem Dekontaminationsfaktor von etwa 10³ - 10⁴ ergeben, bevor mit den Venturidüsen 15 der wesentliche Teil des Gesamt-Dekontaminationsfaktors von z.B. 10⁶ - 10⁹ erreicht wird.

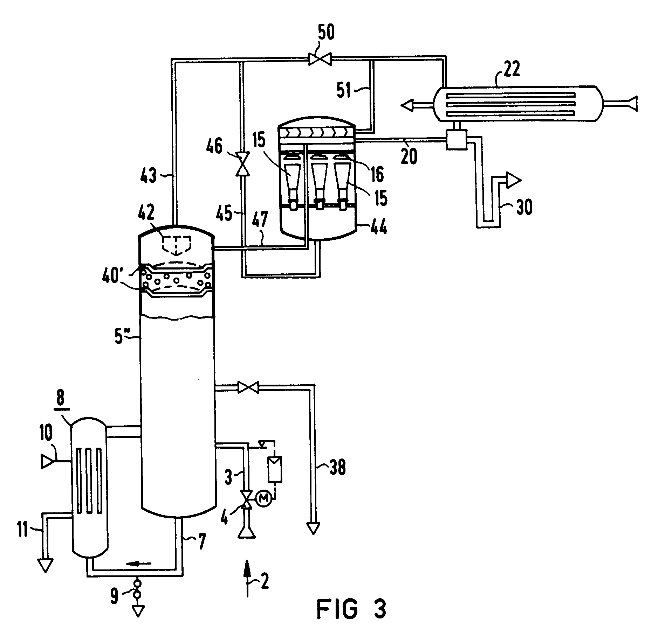

Bei der in FIG 3 dargestellten Umlaufverdampferanlage 1 enthält das Brüdengefäß 5˝ nur eine Abstreifkolonne mit mehreren Siebböden 40′. Ober diesen ist ein Flussigkeitsabscheider 42 angeordnet, der das Eintreten von Flüssigkeitstropfen in die Auslaßleitung 43 verhindern soll.

Die Venturidüsen 15 sitzen in einer besonderen Kolonne 44, die aus der Leitung 43 über eine Leitung 45 mit einem Ventil 46 gespeist wird. Aus dem Kondensator 22 führt die Destillatleitung 20 Waschflüssigkeit in die Kolonne 44, deren Stand durch das Überlaufrohr 47 festgelegt ist. Der Auslaß des Überlaufrohres 47 führt in die Kolonne 5" zurück.

Die Leitung 43 ist über ein Ventil 50 noch mit dem Kondensator 22 verbunden. Hinter dem Ventil 50 mündet die Auslaßleitung 51, die den dekontaminierten Dampf in den Kondensator 22 führt.

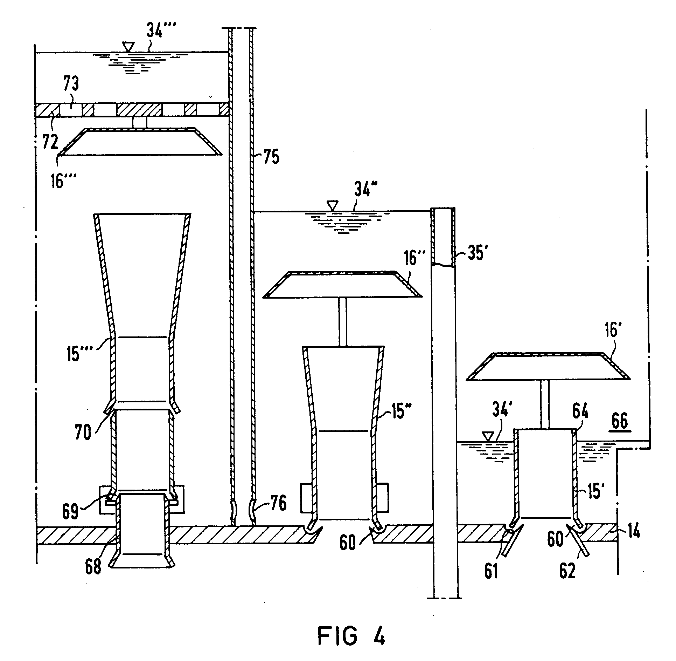

Von den in der FIG 4 dargestellten drei Ausbildungsmöglichkeiten der Venturidüsen 15 ist die rechts gelegene Venturidüse 15' an dem Boden 14 so angeordnet, daß Schlitze 60 zum Ansaugen der Waschflüssigkeit durch Ausnehmungen 61 im Boden 14 gebildet werden. Ferner ist am unteren Ende der Düse 15' ein Einlaßkonus 62 angeordnet, der zum Teil in den Raum unter dem Boden 14 ragt. Der bei 34' angedeutete Flüssigkeitsstand liegt hier unterhalb der Düsenmündung 64, so daß der unter dem Dampfdruck des Verdampfers 8 aufsteigende Dampf frei in den Gasraum 66 gelangt. Der als Prallblech 16' ausgebildete Tropfenabscheider liegt ebenfalls oberhalb des Flüssigkeitsspiegels 34'.

Die mittlere Düse 15" wird wiederum durch Schlitze 60 mit der Waschflüssigkeit gespeist, deren Flüssigkeitsstand 34" mit dem Überlaufrohr 35' oberhalb des Prallabscheiders 16" gehalten wird.

Die linke Düse 15''' besitzt einen im Boden 14 verankerten Einlaßteil 68, der durch den Boden 14 nach unten hindurch ragt. Oberhalb des Einlaßteiles 68 ist eine erste Ringöffnung 69 zum Eintritt der Waschflüssigkeit vorgesehen, deren Flüssigkeitsstand 34''' mit einem nichtdargestellten Überlaufrohr eingestellt wird. Im Abstand von etwa dem Doppelten der Kehlbreite von 50 - 300 mm ist über dem ersten Einlaßschlitz 69 ein zweiter Einlaßschlitz 70 vorgesehen. Dieser zweite Einlaßschlitz ermöglicht eine Anpassung der Waschflüssigkeitsmenge an die Geschwindigkeit und Menge des durch die Düse 15''' hindurchtretenden Dampfes. Damit erreicht man gleichmäßig hohe Dekontaminationsfaktoren nicht nur bei Vollast-, sondern auch bei Teillastbetrieb bis zu 20 % hinunter. Der Prallabscheider 16''' ist hier an einem Siebboden 72 befestigt, dessen Durchtrittslöcher 73 so gewählt sind, daß eine Vergleichmäßigung des aufsteigenden Dampfstromes erreicht wird. Der Siebboden 72 kann an einem Rohr 75 befestigt sein, das zur Zuführung des als Waschflüssigkeit dienenden Destillats verwendet wird. Die Auslaßöffnung ist in der Nähe des Bodens 14 durch Auslaßlöcher 76 gebildet.

## Patentansprüche

1. Umlaufverdampferanlage zur Dekontamination von verunreinigten, insbesondere radioaktiv verunreinigten, Flüssigkeiten mit einem Verdampfer und einer nachgeschalteten Abstreifkolonne mit Destillat als Waschflüssigkeit, **dadurch gekennzeichnet,** daß die Abstreifkolonne als Venturidüsenkolonne ausgeführt ist, und daß im Bereich eines die Venturidüsen (15) tragenden Bodens (14) Schlitze (60) zum Zuführen der Waschflüssigkeit in die Venturidüsen (15) vorgesehen sind.

2. Umlaufverdampferanlage nach Anspruch 1, **dadurch gekennzeichnet,** daß dem Auslaß (64) der Venturidüsen (15) ein Prallblech (16) zugeordnet ist.

3. Umlaufverdampferanlage nach einem der Ansprüche 1 bis 2, **dadurch gekennzeichnet,** daß die Venturidüsen (15) unterhalb des Waschflüssigkeitsspiegels (34) liegen.

4. Umlaufverdampferanlage nach einem der Ansprüche 1 bis 3, **dadurch gekennzeichnet,** daß die Venturidüsen (15''') zwei in ihrer Längsrichtung mit Abstand voneinander liegende Schlitze (69,70) aufweisen.

5. Umlaufverdampferanlage nach einem der Ansprüche 1 bis 4, **dadurch gekennzeichnet,** daß den Venturidüsen (15) einige Glocken- oder Siebböden (40) vorgeschaltet sind.

6. Umlaufverdampferanlage nach einem der Ansprüche 1 bis 5, **dadurch gekennzeichnet,** daß der Waschflüssigkeitsstand (34) durch ein Überlaufrohr (35) festgelegt ist.

7. Umlaufverdampferanlage nach einem der Ansprüche 1 bis 6, **dadurch gekennzeichnet,** daß das Waschflüssigkeitsvolumen (33) durch Füllkörper (39) im Bereich der Venturidüsen (15) verringert ist.

## Claims

1. Circulation evaporating plant for decontamination of unpurified, in particular radioactively unpurified, liquids, having an evaporator and a subsequently connected stripping column with distillate as washing liquid, characterised in that the stripping column is designed as a Venturi nozzle column, and in that in the region of a base (14) carrying the Venturi nozzles (15) slits (60) are provided for conveying washing fluid into the Venturi nozzles (15).

2. Circulation evaporating plant according to claim 1, characterised in that a baffle plate (16) is associated with the outlet (64) of the Venturi nozzles (15).

3. Circulation evaporating plant according to one of claims 1 to 2, characterised in that the Venturi nozzles (15) are below the washing liquid level (34).

4. Circulation evaporating plant according to one of claims 1 to 3, characterised in that the Venturi nozzles (15"') have two slits (69, 70) located in the longitudinal direction and spaced apart.

5. Circulation evaporating plant according to one of claims 1 to 4, characterised in that some bubble trays or perforated bottoms (40) are connected in series with the Venturi nozzles (15).

6. Circulation evaporating plant according to one of claims 1 to 5, characterised in that the washing liquid level (34) is determined by an overflow pipe (35).

7. Circulation evaporating plant according to one of claims 1 to 6, characterised in that the washing liquid volume (33) is reduced by filling bodies (39) in the region of the Venturi nozzles (15).

## Revendications

1. Installation à évaporateur à recirculation pour la décontamination de liquides pollués, notamment par la radioactivité, comportant un évaporateur et une colonne d'épuisement montée en aval, le distillat étant utilisé comme liquide de lavage, caractérisée par le fait que la colonne d'épuisement est réalisée sous la forme d'une colonne à buses à venturi, et que dans un plateau (14) qui porte les buses à venturi (15), il est prévu des fentes (60) servant à introduire le liquide de lavage dans les buses à venturi (15).

2. Installation à évaporateur à recirculation suivant la revendication 1, caractérisée par le fait qu'une tôle de rejaillissement (16) est associée à la sortie (64) des buses à venturi (15).

3. Installation à évaporateur à recirculation suivant l'une des revendications 1 et 2, caractérisée par le fait que les buses à venturi (15) sont en dessous du niveau (34) de liquide de lavage.

4. Installation à évaporateur à recirculation suivant l'une des revendications 1 à 3, caractérisée par le fait que les buses à venturi (15"') possèdent deux fentes (69,70) qui s'étendent, à distance l'une de l'autre, dans la direction longitudinale des buses.

5. Installation à évaporateur à recirculation suivant l'une des revendications 1 à 4, caractérisée par le fait que quelques plateaux à calottes ou à tamis (40) sont montés en amont des buses à venturi (15).

6. Installation à évaporateur à recirculation suivant l'une des revendications 1 à 5, caractérisée par le fait que le niveau (34) du liquide de lavage est déterminé par un tube de trop-plein (35).

7. Installation à évaporateur à recirculation suivant l'une des revendications 1 à 6, caractérisée par le fait que le volume (33) du liquide de lavage est réduit par des corps de garnissage (39) dans la zone des buses à venturi (15).
